(19) Europäisches Patentamt
European Patent Office
Office européen des brevets

(11) **EP 4 478 262 A1**

(12) **DEMANDE DE BREVET EUROPEEN**

(43) Date de publication:
**18.12.2024 Bulletin 2024/51**

(21) Numéro de dépôt: **24180405.3**

(22) Date de dépôt: **06.06.2024**

(51) Classification Internationale des Brevets (IPC):
**G06N 5/04** $^{(2023.01)}$     **G06F 18/2135** $^{(2023.01)}$
**G06F 17/18** $^{(2006.01)}$

(52) Classification Coopérative des Brevets (CPC):
**G06F 17/18; G06F 18/2135; G06N 5/04**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité: **15.06.2023 FR 2306122**

(71) Demandeur: **STMicroelectronics International N.V.**
**1228 Plan-les-Ouates, Geneva (CH)**

(72) Inventeur: **MOUSSA, Mohamed-Ali**
**83000 Toulon (FR)**

(74) Mandataire: **Casalonga**
**Casalonga & Partners**
**Bayerstraße 71/73**
**80335 München (DE)**

(54) **PROCÉDÉ D'ÉLABORATION D'UN MODÈLE DE DÉTECTION D'ANOMALIES ET PROCÉDÉ DE DÉTECTION D'ANOMALIES UTILISANT UN TEL MODÈLE**

(57) Selon un aspect, il est proposé un procédé mis en oeuvre par ordinateur d'élaboration d'un modèle de détection d'anomalies, le procédé comprenant :
- une obtention (30) d'un flux de données d'apprentissage,
- un calcul incrémental (31) des composantes principales du flux de données d'apprentissage,
- une orthonormalisation (32) des composantes principales du flux de données d'apprentissage de manière à obtenir une base orthonormale représentant le flux de données d'apprentissage,
- une élaboration (33) d'un modèle de détection d'anomalies comportant ladite base orthonormale et un seuil de détection défini par l'utilisateur.

[Fig. 3]

EP 4 478 262 A1

# Description

Des modes de réalisation et de mise en oeuvre concernent la détection d'anomalies dans un flux de données.

La détection d'anomalies dans un système physique (en anglais « outlier détection » ou « anomaly détection ») est une technique utilisée pour identifier des données qui diffèrent significativement de données représentatives d'un comportement normal du système physique. Ces données sont souvent appelées "anomalies" ou "valeurs aberrantes".

La détection d'anomalies trouve un intérêt dans de nombreuses applications. Certaines applications utilisent un microcontrôleur déployé dans le système physique à surveiller. Un tel microcontrôleur est alors configuré pour réaliser une détection d'anomalies.

La détection d'anomalies implémentée par un microcontrôleur permet de réaliser une surveillance en temps réel pour détecter des comportements anormaux dans un système physique à partir de données acquises par au moins un capteur de ce système. Cette technique peut être utilisée dans une variété de domaines tels que l'automobile, l'aérospatiale, l'énergie, la production manufacturière, la surveillance de la santé et bien d'autres.

Dans le cadre de la détection d'anomalies, un microcontrôleur utilise généralement un modèle qui représente le comportement normal d'un système pour analyser des données collectées par au moins un capteur du système.

En particulier, le modèle est utilisé pour comparer les données actuelles collectées par ledit au moins un capteur à celles du comportement normal. Si les données actuelles diffèrent trop de celles attendues, cela peut indiquer une anomalie ou un dysfonctionnement dans le système. Dans ce cas, une alerte peut être déclenchée pour avertir un opérateur du système.

La détection d'anomalies implémentée permet donc de prévenir des pannes et des défaillances du système. Cela permet d'améliorer la fiabilité et la sécurité du système.

Le modèle utilisé pour réaliser la détection d'anomalies peut être obtenu à partir d'un algorithme d'apprentissage automatique.

En particulier, l'algorithme d'apprentissage automatique est configuré pour générer un modèle pour la détection d'anomalies à partir de données d'apprentissage représentatives d'un comportant normal du système. Le modèle de détection d'anomalies est élaboré de façon à définir des limites du comportement normal du système. Le modèle de détection d'anomalies peut ensuite être utilisé par un microcontrôleur déployé dans le système physique à surveiller.

Dans certaines applications, il peut être difficile d'obtenir des données d'apprentissage avant un déploiement de la solution dans le système à surveiller. Il est alors préférable de réaliser l'apprentissage, c'est-à-dire l'élaboration du modèle de détection d'anomalies, au sein même du système physique à surveiller. Par exemple, l'apprentissage du modèle de détection d'anomalies est effectué par un microcontrôleur déployé dans le système à surveiller. Une fois le modèle de détection d'anomalies élaboré, ce même microcontrôleur est alors configuré pour utiliser ce modèle de détection d'anomalies.

Dans ce cas, l'apprentissage est réalisé par le microcontrôleur pendant une durée définie par l'utilisateur à partir de données d'apprentissage acquises par au moins un capteur..

Afin d'élaborer un modèle de détection d'anomalies à partir d'un flux de données en utilisant une mémoire de capacité restreinte, le modèle de détection d'anomalies peut être élaboré de manière incrémentale. En d'autres termes, le modèle de détection d'anomalies est élaboré au fur et à mesure de l'acquisition d'un flux de données d'apprentissage. Une empreinte de chaque donnée d'apprentissage est stockée dans la mémoire une fois que ces données d'apprentissage ont été utilisées pour l'élaboration du modèle de détection d'anomalies. Cette empreinte peut correspondre à une information extraite de la donnée d'apprentissage acquise ou bien peut correspondre à la donnée d'apprentissage elle-même.

Il existe plusieurs solutions permettant d'élaborer un modèle de détection d'anomalies qui soit capable de réaliser une détection d'anomalies incrémentale.

Il est par exemple possible d'élaborer un tel modèle de détection d'anomalies en utilisant un modèle de mélange gaussien (en anglais « Gaussian Mixture model ») ou une méthode basée sur une cote Z (en anglais « Z-score » ou « standard score »).

Toutefois, ces méthodes ne sont pas suffisamment performantes dans certaines applications. En outre, elles peuvent nécessiter une occupation de la mémoire importante et une exécution de calculs complexes.

Il existe donc un besoin de proposer une autre solution permettant d'obtenir un modèle pour la détection d'anomalies qui soit simple à mettre en oeuvre par un microcontrôleur.

Selon un aspect, il est proposé un procédé mis en oeuvre par ordinateur d'élaboration d'un modèle de détection d'anomalies, le procédé comprenant :

- une obtention d'un flux de données d'apprentissage,
- un calcul incrémental des composantes principales du flux de données d'apprentissage,
- une orthonormalisation des composantes principales calculées de manière à obtenir une base orthonormale représentant le flux de données d'apprentissage,
- une élaboration d'un modèle de détection d'anomalies comportant ladite base orthonormale et un seuil de détection défini par l'utilisateur.

En particulier, le procédé d'élaboration du modèle de détection d'anomalies correspond à une phase d'apprentissage permettant d'élaborer le modèle de détection. La durée de cette phase d'apprentissage peut être définie par l'utilisateur.

Un tel procédé permet d'obtenir un modèle de détection d'anomalies adapté pour réaliser une détection d'anomalies incrémental. En particulier, le modèle de détection est adapté pour classer des données qu'il reçoit en entrée comme étant des données normales ou comme étant des données anormales. Ces données peuvent être issues d'une acquisition réalisée dans un système physique à surveiller. Par exemple, les données peuvent être des données mesurées par un accéléromètre dans une machine rotative. Les données peuvent également correspondre à un courant électrique consommé par un appareil, ou encore à un signal sonore associé à un événement donné.

Le procédé permet de définir simplement une base orthonormale correspondant à un comportement normal du système physique. Le modèle de détection d'anomalies comprend la base orthonormale et le seuil de détection défini. Le modèle de détection d'anomalies est donc simple, occupe relativement peu d'espace en mémoire et peut être exécuté rapidement. De la sorte, un tel modèle de détection peut être élaboré et mis en oeuvre par un microcontrôleur.

Dans un mode de mise en oeuvre avantageux, le calcul incrémental des composantes principales du flux de données comprend une mise en oeuvre d'une méthode d'analyse en composantes principales incrémentielle sans covariance.

Une telle méthode permet d'obtenir les composantes principales du flux de données d'apprentissage sans nécessiter de calculer une matrice de covariance du flux de données. Une telle méthode permet ainsi de réduire l'occupation mémoire pour obtenir les composantes principales du flux de données d'apprentissage et est plus rapide à mettre en oeuvre.

De préférence, l'orthonormalisation de la base comprend une mise en oeuvre d'un algorithme modifié de Gram- Schmidt à partir des composantes principales du flux de données d'apprentissage.

Avantageusement, le procédé comprend en outre une élaboration d'un produit programme d'ordinateur de détection d'anomalies comprenant des instructions qui, lorsque le programme est exécuté par un ordinateur, conduisent celui-ci à mettre en oeuvre ledit modèle de détection.

Dans un mode de mise en oeuvre avantageux, ledit seuil de détection est supérieur ou égal à 70% par exemple de l'ordre de_90%.

Le seuil de détection représente un pourcentage d'énergie capturé par la base calculée.

Selon un autre aspect, il est proposé un procédé mis en oeuvre par ordinateur de détection d'anomalies, le procédé comprenant :

- une obtention d'un flux de données à surveiller,
- une projection vectorielle des données à surveiller sur une base orthonormale représentant un flux de données d'apprentissage fournie par un modèle de détection d'anomalies ,

- un calcul d'énergie des données projetées sur la base orthonormale et un calcul d'énergie des données à surveiller,
- un calcul d'un rapport d'énergies entre l'énergie calculée des données à surveiller et l'énergie calculée des données projetées sur la base orthonormale,
- une comparaison du rapport calculé à un seuil de détection fourni par le modèle de détection d'anomalies,
- une évaluation des données à surveiller comme étant des données normales ou des données anormales en fonction d'un résultat de la comparaison.

En particulier, le procédé de détection d'anomalies correspond à une phase d'inférence permettant de mettre en oeuvre le modèle de détection élaboré.

Un tel procédé de détection d'anomalies présente l'avantage d'utiliser un modèle de détection simple, occupant peu d'espace en mémoire. Le procédé de détection d'anomalies présente également l'avantage de nécessiter peu de ressources en calcul. Le procédé de détection d'anomalies peut donc être mis en oeuvre rapidement. Un tel procédé de détection d'anomalies peut alors être mis en oeuvre par un microcontrôleur.

De préférence, les données sont évaluées comme étant normales lorsque le rapport est supérieur ou égal audit seuil de détection et comme étant anormales lorsque le rapport est inférieur audit seuil de détection.

Avantageusement, le procédé comprend en outre une génération d'un signal d'alerte si les données à surveiller sont évaluées comme étant anormales afin de notifier une détection d'anomalie.

Selon un autre aspect, il est proposé un procédé mis en oeuvre par ordinateur comprenant :

- une mise en oeuvre d'un procédé d'élaboration d'un modèle de détection d'anomalies tel que décrit précédemment puis,
- une mise en oeuvre d'un procédé de détection d'anomalies tel que décrit précédemment.

Ainsi, le procédé d'élaboration du modèle de détection d'anomalies (phase d'apprentissage) est suivi par le procédé de détection (phase d'inférence). Ces deux procédés sont alors mis en oeuvre successivement par un microcontrôleur déployé dans un système physique à surveiller par exemple.

Selon un autre aspect, il est proposé un produit programme d'ordinateur d'élaboration d'un modèle de détection d'anomalies comprenant des instructions qui, lorsque le programme est exécuté par un ordinateur, conduisent celui-ci à mettre en oeuvre un procédé d'élaboration d'un modèle de détection d'anomalies tel que décrit précédemment.

Selon un autre aspect, il est proposé un produit programme d'ordinateur de détection d'anomalies comprenant des instructions qui, lorsque le programme est exécuté par un ordinateur, conduisent celui-ci à mettre en oeuvre un procédé de détection d'anomalies tel que décrit précédemment.

Selon un aspect, il est proposé un microcontrôleur comprenant :

- une mémoire comprenant un produit programme d'ordinateur d'élaboration d'un modèle de détection d'anomalies tel que décrit précédemment,
- une unité de traitement configurée pour exécuter ledit produit programme d'ordinateur.

Avantageusement, la mémoire comprend en outre un produit programme d'ordinateur de détection d'anomalies tel que décrit précédemment, l'unité de traitement étant également configurée pour exécuter ce produit programme d'ordinateur.

D'autres avantages et caractéristiques de l'invention apparaîtront à l'examen de la description détaillée de modes de réalisation, nullement limitatifs, et des dessins annexés sur lesquels :

    [Fig 1]
    [Fig 2]
    [Fig 3]

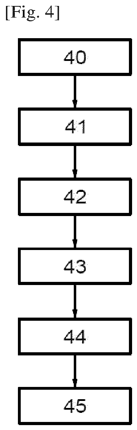

    [Fig 4] illustrent des modes de réalisation et de mise en oeuvre de l'invention.

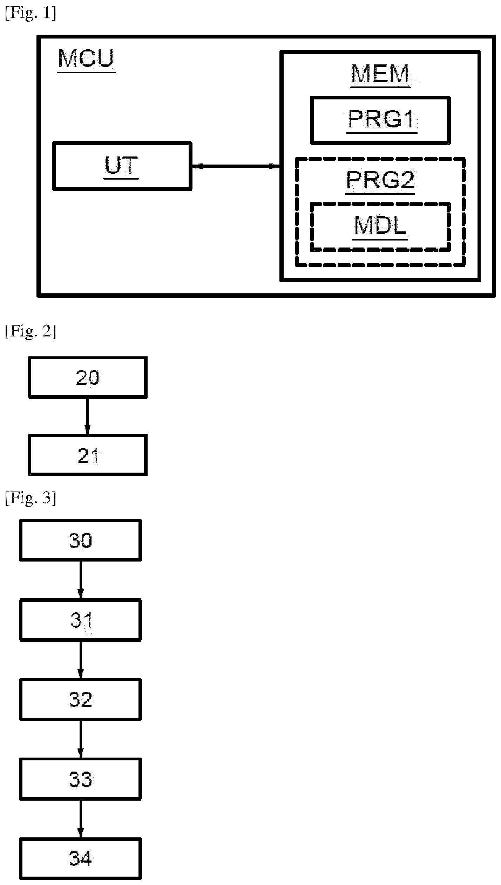

La figure 1 illustre un microcontrôleur MCU configuré pour mettre en oeuvre un procédé pour la détection d'anomalies.

Le microcontrôleur peut être intégré dans un système pour lequel une surveillance d'anomalies de fonctionnement est requise. Le microcontrôleur peut être configuré pour recevoir des données acquises par un dispositif d'acquisition dudit système. Ces données acquises sont alors représentatives du fonctionnement du système. Par exemple, le système physique peut être une machine rotative. Dans ce cas, les données peuvent être des données mesurées par un accéléromètre dans une machine rotative.

Le microcontrôleur MCU comprend une unité de traitement UT et une mémoire MEM.

La mémoire MEM comprend un programme d'ordinateur PRG1 comprenant des instructions qui, lorsqu'elles sont mises en oeuvre par l'unité de traitement UT du microcontrôleur conduisent celle-ci à mettre en oeuvre un procédé d'élaboration d'un modèle de détection d'anomalies tel que décrit dans la suite. Ce procédé permet d'obtenir un modèle de détection d'anomalies MDL à partir de données d'apprentissage. Plus particulièrement, ce procédé permet de générer un programme d'ordinateur PRG2 comprenant des instructions qui, lorsqu'elles sont mises en oeuvre par l'unité de traitement UT du microcontrôleur conduisent celle-ci à mettre en oeuvre un procédé de détection d'anomalies tel que décrit dans la suite utilisant ledit modèle de détection d'anomalies MDL élaboré.

Une fois le programme d'ordinateur élaboré, la mémoire MEM comprend ce programme d'ordinateur PRG2 utilisant le modèle de détection d'anomalies MDL élaboré.

Ce programme d'ordinateur PRG2 peut être exécuté par l'unité de traitement UT pour effectuer une détection d'anomalies à partir de données à surveiller.

La figure 2 illustre un procédé mis en oeuvre par ordinateur pour la détection d'anomalies. Ce procédé peut être mis en oeuvre par un microcontrôleur MCU tel que décrit en relation avec la figure 1.

Le procédé comprend une mise en oeuvre 20 d'un procédé d'élaboration d'un modèle de détection d'anomalies puis une mise en oeuvre 21 d'un procédé de détection d'anomalies utilisant le modèle de détection d'anomalies élaboré. Le procédé d'élaboration d'un modèle de détection d'anomalies est décrit dans la suite en relation avec la figure 3. Le procédé de détection d'anomalies est décrit dans la suite en relation avec la figure 4.

La figure 3 illustre un procédé mis en oeuvre par ordinateur d'élaboration d'un modèle de détection d'anomalies. L'ordinateur peut être le microcontrôleur MCU.

Un tel procédé est utilisé pour définir un modèle déterminant des limites d'un comportement normal d'un système physique. Le procédé d'élaboration du modèle de détection d'anomalies correspond donc à une phase d'apprentissage permettant d'élaborer le modèle de détection. En particulier, la phase d'apprentissage permet d'ajuster des paramètres du modèle de détection au fur et à mesure de l'acquisition d'un flux de données représentatif du comportement du système physique à surveiller. La durée de la phase d'apprentissage peut être définie par l'utilisateur. La durée de la phase d'apprentissage permet de définir la quantité de données d'apprentissage à utiliser pour élaborer le modèle de détection.

Le procédé comprend une étape 30 d'obtention d'un flux données d'apprentissage. Dans cette étape 30, le flux de données d'apprentissage est fourni au microcontrôleur. Les données d'apprentissage sont notamment acquises par un dispositif d'acquisition, tel qu'un capteur.

Les données d'apprentissage sont des données représentatives d'un comportement normal d'un système. Chaque donnée d'apprentissage est représentée par un vecteur de valeurs.

Le procédé comprend ensuite une étape 31 de calcul incrémental des composantes principales du flux de données. En particulier, l'unité de traitement du microcontrôleur exécute une méthode d'analyse en composantes principales incrémentielle sans covariance (en anglais « covariance free incrémental principal component »). Une telle méthode d'analyse est bien connue de l'homme du métier. En particulier, la méthode d'analyse correspond à un algorithme incrémental d'approximation des composantes principales en utilisant un flux de données. Le nombre de composantes principales est fixé en avance. L'algorithme applique une mise à jour des composantes principales à chaque acquisition de données. Cette mise à jour est réalisée en se basant sur diverses opérations de projection.

La méthode est effectuée de manière incrémentale, c'est-à-dire que les données d'apprentissage sont utilisées au fur et à mesure de leur acquisition.

Cette méthode d'analyse permet d'obtenir un ensemble de vecteurs des composantes principales du flux de données.

Cette méthode d'analyse présente l'avantage d'éviter de calculer une matrice de covariance. Cette méthode permet donc d'extraire les composantes principales d'un ensemble de données de manière itérative et en utilisant moins de ressources (opérations de calcul et mémoire) que les méthodes traditionnelles basées sur la covariance.

Le procédé comprend ensuite une étape 32 d'orthonormalisation de l'ensemble de vecteurs des composantes principales du flux de données. L'orthonormalisation correspond à une transformation de cet ensemble de vecteur vers une base orthonormale. En particulier, l'unité de traitement exécute un algorithme modifié de Gram-Schmidt (en anglais « modified Gram-Schmidt process ») bien connu de l'homme du métier.

En particulier, pour un ensemble de vecteurs de composantes principales constitué de vecteur $x_j$, j allant de 1 à n, n correspondant au nombre de vecteurs $x_j$, l'algorithme comprend une initialisation de vecteurs $v_j$, j allant de 1 à n. Chaque vecteur $v_j$ est initialisé à la valeur du vecteur $x_j$. Ensuite, l'algorithme comprend une boucle de calcul de vecteurs orthonormés $q_j$, j allant de 1 à n. La boucle de calcul de vecteurs orthonormés $q_j$ comprend un calcul du vecteur $q_j$. Le calcul du vecteur $q_j$ correspond à une normalisation du vecteur $v_j$. Le vecteur $q_j$ est donc égal à la division du vecteur $v_j$ par sa norme euclidienne ($q_j = v_j / \|v_j\|_2$). La boucle de calcul du vecteur $q_j$ comprend ensuite une boucle de mise à jour des vecteurs $v_k$, k étant un index allant de j+1 à n. La boucle de mise à jour des vecteurs $v_k$ comprend un calcul du vecteur $v_k$ par la formule suivante :

$$v_k = v_k - \left(q_j^T v_k\right) q_j$$

L'étape 32 d'orthonormalisation permet d'obtenir une base orthonormale de vecteurs $q_j$ qui correspond à un ensemble orthogonalisé des vecteurs $x_j$ initiaux. La base orthonormale sert à corriger une erreur d'orthogonalité induite par l'approximation des composantes principales calculées. La base orthonormale sert également à calculer l'énergie des données portées par cette base.

Le procédé comprend une élaboration 33 d'un modèle de détection d'anomalies comportant ladite base orthonormale et un seuil de détection défini par l'utilisateur. Ledit seuil de détection peut être supérieur ou égal à 70%, par exemple de l'ordre de 90%.

Le procédé comprend en outre une élaboration 34 d'un produit programme d'ordinateur comprenant des instructions qui, lorsque le programme est exécuté par un ordinateur, conduisent celui-ci à mettre en oeuvre un tel modèle de détection.

Un tel procédé permet d'obtenir un modèle de détection d'anomalies adapté pour réaliser une détection d'anomalies incrémentale. En particulier, le modèle de détection est adapté pour classer des données qu'il reçoit en entrée comme étant données normales ou des données d'anomalie.

Le procédé permet de définir simplement une base orthonormale correspondant à un comportement normal du système physique. Le modèle de détection d'anomalies comprend la base orthonormale et le seuil de détection défini. Le modèle de détection d'anomalies est donc simple, occupe relativement peu d'espace en mémoire et peut être exécuté rapidement. De la sorte, un tel modèle de détection peut être élaboré et mis en oeuvre par un microcontrôleur.

La figure 4 illustre un procédé mis en oeuvre par ordinateur de détection d'anomalies dans un système physique à surveiller.

Le procédé comprend une étape 40 d'obtention d'un flux données à surveiller. Dans cette étape 40, le flux de données à surveiller est fourni au microcontrôleur. Les données à surveiller sont notamment acquises par un dispositif d'acquisition disposé dans le système physique à surveiller. Chaque donnée est représentée par un vecteur de valeurs.

Le procédé comprend ensuite une étape 41 de projection vectorielle. Dans cette étape 41, l'unité de traitement projette les données à surveiller sur la base orthonormale. La projection vectorielle correspond à un produit scalaire entre les données à surveiller et chaque vecteur de la base orthonormale.

Le procédé comprend ensuite une étape 42 de calcul d'énergie. Dans cette étape 42, l'unité de traitement calcule l'énergie des données projetées sur la base orthonormale. L'unité de traitement calcule également l'énergie des données à surveiller. L'énergie d'un vecteur correspond à la somme des carrés de tous les éléments de ce vecteur.

Le procédé comprend ensuite une étape 43 de calcul d'un rapport d'énergies. Dans cette étape 43, l'unité de traitement calcule un rapport entre l'énergie des données à surveiller et l'énergie des données projetées sur la base orthonormale.

Le procédé comprend ensuite une étape 44 de comparaison. Dans cette étape, l'unité de traitement compare le rapport calculé au seuil de détection fourni par le modèle de détection. Cette comparaison permet de déterminer si les données à surveiller correspondent à des données normales, telles que celles utilisées pour l'entraînement du modèle de détection, ou bien à des données qui correspondent à des données anormales.

En particulier, le procédé comprend une étape 45 d'évaluation. Dans cette étape, l'unité de traitement évalue les données à surveiller en fonction du résultat de la comparaison.

Plus particulièrement, si le rapport calculé est supérieur ou égal au seuil de détection, alors l'unité de traitement évalue les données à surveiller comme étant des données normales.

Si le rapport calculé est inférieur au seuil de détection, alors l'unité de traitement évalue les données à surveiller comme étant des données anormales.

Si l'unité de traitement évalue les données à surveiller comme étant des données anormales, alors le procédé peut comprendre une étape d'alerte. Dans cette étape, l'unité de traitement génère un signal d'alerte permettant de notifier une détection d'anomalies.

Un tel procédé de détection d'anomalies présente l'avantage d'utiliser un modèle de détection simple, occupant peu d'espace en mémoire. Le procédé de détection d'anomalies présente également l'avantage de nécessiter peu de ressources en calcul. Le procédé de détection d'anomalies peut donc être mis en oeuvre rapidement. Un tel procédé de détection d'anomalies peut donc être mis en oeuvre par un microcontrôleur déployé dans un système physique à surveiller.

## Revendications

1. Procédé mis en oeuvre par ordinateur d'élaboration d'un modèle de détection d'anomalies, le procédé comprenant :

   - une obtention (30) d'un flux de données d'apprentissage,
   - un calcul incrémental (31) des composantes principales du flux de données d'apprentissage,
   - une orthonormalisation (32) des composantes principales calculées de manière à obtenir une base orthonormale représentant le flux de données d'apprentissage,
   - une élaboration (33) d'un modèle de détection d'anomalies comportant ladite base orthonormale et un seuil de détection défini par l'utilisateur.

2. Procédé selon la revendication 1, dans lequel le calcul incrémental (31) des composantes principales du flux de données comprend une mise en oeuvre d'une méthode d'analyse en composantes principales incrémentielle sans covariance.

3. Procédé selon l'une quelconque des revendications 1 ou 2, dans lequel l'orthonormalisation (32) de la base comprend une mise en oeuvre d'un algorithme modifié de Gram- Schmidt à partir des composantes principales du flux de données d'apprentissage.

4. Procédé selon l'une des revendications 1 à 3, comprenant en outre une élaboration (34) d'un produit programme d'ordinateur de détection d'anomalies comprenant des instructions qui, lorsque le programme est exécuté par un ordinateur, conduisent celui-ci à mettre en oeuvre ledit modèle de détection.

5. Procédé selon l'une des revendications 1 à 4, dans lequel ledit seuil de détection est supérieur ou égal à 70%.

6. Procédé mis en oeuvre par ordinateur de détection d'anomalies, le procédé comprenant :

   - une obtention (40) d'un flux de données à surveiller,
   - une projection (41) vectorielle des données à surveiller sur une base orthonormale représentant un flux de données d'apprentissage fournie par un modèle de détection d'anomalies,
   - un calcul (42) d'énergie des données projetées sur la base orthonormale et un calcul d'énergie des données à surveiller,
   - un calcul (43) d'un rapport d'énergies entre l'énergie calculée des données à surveiller et l'énergie calculée des données projetées sur la base orthonormale,
   - une comparaison (44) du rapport calculé à un seuil de détection fourni par le modèle de détection d'anomalies,
   - une évaluation (45) des données à surveiller comme étant des données normales ou des données anormales en fonction du résultat de la comparaison.

7. Procédé selon la revendication 6, dans lequel les données sont évaluées comme étant normales lorsque le rapport est supérieur ou égal audit seuil de détection et comme étant anormales lorsque le rapport est inférieur audit seuil de détection.

8. Procédé selon l'une des revendications 6 ou 7, comprenant en outre une génération d'un signal d'alerte si les données à surveiller sont évaluées comme étant anormales afin de notifier une détection d'anomalie.

9. Procédé mis en oeuvre par ordinateur comprenant :

   - une mise en oeuvre (20) d'un procédé d'élaboration d'un modèle de détection d'anomalies selon l'une des revendications 1 à 5 puis,
   - une mise en oeuvre (21) d'un procédé de détection d'anomalies selon l'une des revendications 6 à 8.

10. Produit programme d'ordinateur d'élaboration d'un modèle de détection d'anomalies comprenant des instructions qui, lorsque le programme est exécuté par un ordinateur, conduisent celui-ci à mettre en oeuvre un procédé d'élaboration d'un modèle de détection d'anomalies selon l'une des revendications 1 à 5.

**11.** Produit programme d'ordinateur de détection d'anomalies comprenant des instructions qui, lorsque le programme est exécuté par un ordinateur, conduisent celui-ci à mettre en oeuvre un procédé de détection d'anomalies selon l'une des revendications 6 à 8.

**12.** Microcontrôleur comprenant :

- une mémoire (MEM) comprenant un produit programme d'ordinateur d'élaboration d'un modèle de détection d'anomalies selon la revendication 10,
- une unité de traitement (UT) configurée pour exécuter ledit produit programme d'ordinateur.

**13.** Microcontrôleur selon la revendication 12, dans lequel la mémoire comprend en outre un produit programme d'ordinateur de détection d'anomalies selon la revendication 11, l'unité de traitement (UT) étant également configurée pour exécuter ce produit programme d'ordinateur.

[Fig. 1]

```
MCU
                                    MEM

                                  PRG1

   UT  <--------------->

                                  PRG2

                                    MDL
```

[Fig. 2]

```
   20

   21
```

[Fig. 3]

```
   30

   31

   32

   33

   34
```

[Fig. 4]

Europäisches
Patentamt

European
Patent Office

Office européen
des brevets

# RAPPORT DE RECHERCHE EUROPEENNE

Numéro de la demande

EP 24 18 0405

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | TEH HUI YIE ET AL: "Expect the Unexpected: Unsupervised Feature Selection for Automated Sensor Anomaly Detection", IEEE SENSORS JOURNAL, IEEE, USA, vol. 21, no. 16, 31 mai 2021 (2021-05-31), pages 18033-18046, XP011871864, ISSN: 1530-437X, DOI: 10.1109/JSEN.2021.3084970 [extrait le 2021-08-12] * page 18039, colonne de droite, dernier alinéa; figures 4, 7 * * page 18039, colonne de gauche, alinéa 3 * * page 18041, colonne de droite, alinéa 3 * <br> - - - - - | 1-13 | INV. G06N5/04 G06F18/2135 G06F17/18 |
| | | | DOMAINES TECHNIQUES RECHERCHES (IPC) |
| | | | G06F G06V G06N |

Le présent rapport a été établi pour toutes les revendications

| Lieu de la recherche | Date d'achèvement de la recherche | Examinateur |
|---|---|---|
| Munich | 22 octobre 2024 | Herri, Edmond |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

........................................................................
& : membre de la même famille, document correspondant

EPO FORM 1503 03.82 (P04C02)